# EUROPEAN PATENT SPECIFICATION

(11) **EP 0 488 960 B1**
(45) Date of publication and mention of the grant of the patent: **31.01.1996**
(21) Application number: 91830444.5
(22) Date of filing: 17.10.1991
(51) Int. Cl.: F16D 43/206

(54) **A drive coupling able to limit transmissible torque and maintain synchronous rotation between driving and driven members**
Zum Begrenzen des übertragbaren Drehmoments und zum Instandhalten der synchronen Drehbewegung von treibendem und getriebenem Element ausgelegte Antriebskupplung
Accouplement de transmission apte à limiter le couple transmis et à maintenir la rotation synchrone des éléments menant-et-mené

(30) Priority: 28.11.1990 IT 375390
(43) Date of publication of application: 03.06.1992
(73) Proprietor: O.M.C. S.n.c. di DANTE CAVALLI & C., I-40055 Villanova di Castenaso (Bologna) (IT)
(72) Inventor: Cavalli, Dante, I-40055 Villanova di Castenaso (Bologna) (IT)
(74) Representative: Lanzoni, Luciano

(56) References cited:
- CH-A- 348 314
- DE-C- 483 186
- FR-A- 2 417 926
- GB-A- 875 490
- US-A- 3 722 644

## Description

The present invention relates to a drive coupling with the capacity to limit transmissible torque and maintain synchronous rotation, particularly between shafts or mechanical drives having a transmission ratio other than unity.

The use of drive couplings able to limit torque is of considerable importance in effecting connections between the power shafts of equipment or machines installed in tandem or in series, to the end of ensuring that the driving shafts, or at all events the shafts installed upline in the kinematic chain of the coupled machine, are able to rotate idle whenever the driven shaft decelerates sharply or stops due to a sudden breakdown occurring along the driveline, for example, or to operator error, thus avoiding dangerous overloads that could damage the machine and give rise to situations hazardous for personnel.

With this aim in view, drive couplings of the type incorporating a torque limiter consist essentially in two coaxial hubs of which the transverse faces offered one to another and destined to enter into mutual contact are embodied with rolling elements accommodated in relative seatings, and respective notches in which the rolling elements are received when the transverse faces of the hubs are brought together.

The two hubs are maintained in mechanical contact one with the other by spring means; in the event that the resisting force of the driven shaft should exceed the corresponding force component determined by the spring means in holding the hubs together, the spring means are compressed and the rolling elements unseated from the notches, with the result that the driving shaft is able to rotate freely in relation to the driven shaft. Such a drive coupling is known from US-A-3 722 644.

To prevent the driving shaft from spinning idle for any excessive period of time, sensing means are associated with the coupling of which the purpose is to pick up any deceleration of the driven shaft, or preferably to detect any distancing movement between the hubs, and thereupon to inhibit further rotation of the driving shaft.

Further problems occur at the moment when the hubs re-engage, that is to say, on reinstatement of the kinematic chain comprising the hubs and the driving and driven shafts.

In certain applications there may be no need for synchronous rotation between the driving and driven shafts, and any given mechanical connection of the two hubs is acceptable, even one allowing relative rotation of the hubs to a greater or lesser degree. Conversely, the shafts must often be timed one with another, in which case the transmission ratio also comes into play.

With a transmission ratio of 1, i.e. where one full revolution of both the driving shaft and the driven shaft corresponds to one work cycle of the machine, synchronization is ensured by spacing the rolling elements and the notches apart circumferentially through a distance such that the elements and the respective notches coincide when, and only when, the one hub is rotated through a precise angle in relation to the other.

By contrast, when the transmission ratio between the two shafts is other than unity, reactivation of the driving shaft must occur with the two shafts positioned one in relation to the other exactly in the same manner as prior to detection of the error, otherwise the correct timing will be lost.

This is achieved currently by keying one of the two hubs, for example the driving hub embodied with the notches, to an intermediate splined hub affording travel limiters by which the keyed hub is engaged. The distance between the limiters is such as will allow the movable hub an axial travel of length less than the amount by which the rolling elements protrude from the respective seatings.

This signifies that the two hubs remain permanently engaged even when an excessive reaction through the driven shaft causes their mutual separation. Again, sensing means are provided by which any malfunction is detected and converted into a control signal to shut off the driving shaft. Detection of the error and subsequent deactivation of the driving shaft do not occur instantaneously however, and the coupled shafts may continue to rotate under the force of inertia at least for part of one revolution before coming ultimately to a standstill, thus aggravating the condition which gave rise to the malfunction initially.

Accordingly, the object of the present invention is to provide a drive coupling with the capacity to limit transmissible torque and maintain synchronous rotation between driving and driven shafts, which allows the driving shaft to rotate in relation to the driven shaft before coming to a standstill. The stated object is achieved in a drive coupling as characterized in the appended claims, of a type able to limit transmissible torque and maintain synchronous rotation in particular between shafts of which the transmission ratio is other than unity, comprising two hubs coaxial with and secured to the members to be mechanically connected, of which the opposed transverse faces afford, the one, a plurality of identical rolling elements stably accommodated in relative seatings and able to revolve freely at least about respective radial axes in relation to the hubs, and the other, a corresponding plurality of notches to receive the rolling elements.

According to the invention, each of the opposed transverse faces aforesaid exhibits a respective projection of depth, departing from the transverse face and measured parallel to the common axis of the hubs, less than the distance by which the rolling elements protrude from the relative face, and at least one socket positioned to receive the projection of the opposite hub. The projections and the sockets are located respectively at a distance from the centre of the relative hub dissimilar to the radius of the circumference around which the rolling elements and the corresponding notches are distributed, in such a way that the projection associated with the driving hub enters into contact exclusively with the projection of the driven hub, and only after rotating almost through one complete revolution in relation to the driven hub.

The invention will now be described in detail, by way of example, with the aid of the accompanying drawings, in which:
- fig 1 is an exploded view of the two hubs making up a drive coupling according to the invention, detached one from the other;
- fig 2 shows a frontal elevation of one of the hubs of a coupling as in fig 1, and superimposed thereon in phantom line, the characterizing elements of the other hub, in the normal operating condition.

With reference to the accompanying drawings, a drive coupling according to the invention consists in a pair of coaxial hubs 1 and 2 of which the opposed faces 11 and 21 afford rolling elements 3 and corresponding notches 4, respectively.

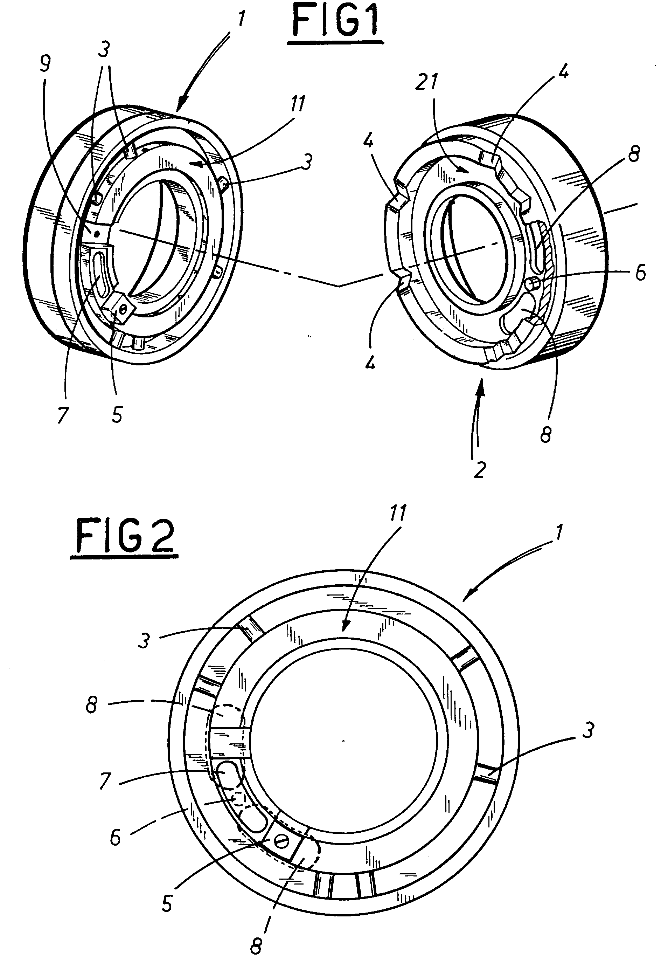

The rolling elements 3, which might be spherical, cylindrical as illustrated in fig 1, or of other suitable shape, are accommodated in respective seatings formed in the relative hub 1 and able to rotate freely in the seatings about axes disposed radially in relation to the hub, projecting from the seatings in part only, similar to a roller catch. Needless to say, the rolling elements 3 and the corresponding notches 4 are distributed around circumferences concentric with the hubs 1 and 2.

The coupling further comprises spring means (not illustrated) by which the hubs 1 and 2 are urged together and thus caused to engage positively one with another by insertion of the rolling elements 3 in the respective notches 4.

According to the invention, the faces 11 and 21 of the hubs 1 and 2 affording the rolling elements 3 and the notches 4, respectively, also exhibit a projection 5 and 6 and socket 7 and 8. As may be appreciated readily, the socket 7 afforded by the face 11 of the one hub 1 serves to receive the projection 6 presented by the other hub 2, and the socket 8 afforded by the face 21 of the latter to receive the projection 5 presented by the former.

In short, each hub 1 and 2 exhibits a projection 5, 6 insertable in a corresponding socket 8, 7 of the remaining hub 2, 1.

The axial depth of each projection 5 and 6 is less than the distance by which the rolling elements 3 protrude from the relative face 11. Furthermore, the projections 5, 6 and the sockets 8, 7 are set at a distance from the axis of the corresponding hub 1, 2 that is dissimilar to the radius of the circumference occupied by the rolling elements 3 and the notches 4.

Thus, when the hubs 1 and 2 rotate in relation to one another, the projections 5, 6 become unseated from the respective sockets 8, 7 and, entering into contact with no other element of the opposite hub whatever, are brought into mutual contact after the driving hub 2 has turned through almost one full revolution in relation to the driven hub 1. In the greater number of cases, considering the entity of the masses typically in motion, the driving shaft tends to draw to a standstill before completing a full revolution; at all events, in cases where the driving shaft may not come to a full stop before one full revolution is completed, for example where there is no suitable brake, a distance just short of 360° is sufficient for the angular velocity of the hub 2 to reduce significantly, such that when the relative projection 6 enters ultimately into contact with the projection 5 of the other hub, the rotational speed of the hub 2 will be much less and any impact thus slight. Before restoring normal operation, it suffices to rotate the driving shaft in the opposite direction by hand in such a way as to resynchronize the hubs 1 and 2, i.e. to restore the condition in which neither one can rotate in relation to the other. More exactly, the driving hub 2 is rotated manually in the direction opposite to that of normal operation, to the point where the one projection 6 strikes against the other 5, and thereafter in the normal driving direction in such a way that the rolling elements 3 locate in the respective notches 4.

A firmer guarantee of correct timing between the shafts can be obtained by distancing the rolling elements 3 and the notches 4 circumferentially one from another in such a way that their positions correspond at a certain precise angle of relative rotation between the two hubs 1 and 2. Thus, it suffices simply to rotate the driving hub 2 in the reverse direction to locate the rolling elements 3 in the respective notches 4.

Given, moreover, that the direction of rotation of different shafts to which the drive coupling can be fitted may not always be the same, the projection 5 associated with the driven hub 1 might be secured removably, for example by means of a screw in one of two positions on either side of the socket 7 offered to the projection 6 of the driving hub 2, the latter hub 2 exhibiting two sockets 8 disposed one on either side of the relative projection 6.

Thus, the fixed projection 5 is secured on the left or right hand side of the socket 7 to determine the direction of rotation allowed to the driving hub 2 whenever the reaction of the driven shaft exceeds the force of the spring means uniting the hubs 1 and 2. As shown in fig 1, the driven hub 1 affords two seatings 9, one on each side of the relative socket 7, in which to secure the fixed projection 5 as appropriate (see fig 2 in particular).

In addition to realizing the object stated at the outset, the present invention affords the advantage of achieving a simpler overall structure of the coupling: the intermediate hub of the conventional coupling can be dispensed with, likewise therefore the machining operations needed normally to effect a keyed fit between the driving and intermediate hubs, resulting in much reduced costs and a more streamlined structure.

## Claims

1. A drive coupling able to limit transmissible torque and maintain synchronous rotation in particular between shafts of which the transmission ratio is other than unity, of the type comprising two hubs (1, 2) coaxial with and secured to the members to be mechanically connected, of which the opposed transverse faces (11, 21) respectively afford a plurality of identical rolling elements (3) stably accommodated in relative seatings, able to revolve freely at least about respective radial axes in relation to the hubs (1, 2), and a corresponding plurality of notches (4) to receive the rolling elements (3),
characterized
- in that each of the opposed transverse faces (11, 21) of the two hubs (1, 2) exhibits a respective projection (5, 6) of depth, departing from the transverse face and measured parallel to the common axis of the hubs, less than the distance by which the rolling elements (3) protrude from the relative face, and at least one socket (7, 8) positioned to receive the projection (5, 6) of the opposite hub in its entirety; and
- in that the projections (5, 6) and the sockets (8, 7) are positioned respectively at a distance from the centre of the relative hub (1, 2) dissimilar to the radius of the circumference around which the rolling elements (3) and the corresponding notches (4) are distributed, such that the projection (5) associated with the hub (2) carried by the driving shaft enters into contact exclusively with the projection (6) of the hub (1) carried by the driven shaft, and only after rotating almost through one complete revolution in relation to the driven hub.

2. A drive coupling according to claim 1, characterized by the rolling elements (3) and the notches (4) being spaced apart circumferentially one from the next at distances such that all the rolling elements locate in the respective notches only when the hubs (1, 2) are in one circumferentially matched position.

3. A coupling as in claim 1, characterized in that the projection (5, 6) associated with at least one hub (1, 2) is removable, in such a way that it can be secured in one of two different positions located on either side of the socket (7 or 8) destined to receive the remaining projection (6 or 5), and the opposite hub (2 or 1) affords two sockets (8 or 7) for receipt of the removably secured projection (5 or 6).

## Patentansprüche

1. Antriebskupplung, in der Lage, das übertragbare Drehmoment zu begrenzen und die synchrone Drehbewegung beizubehalten, insbesondere zwischen Wellen, deren Übersetzungsverhältnis anders als einheitlich ist, vom Typ enthaltend zwei Naben (1, 2), koaxial zu den mechanisch miteinander zu verbindenden Elementen angeordnet und an diesen befestigt sind, deren sich gegenüberliegende querverlaufende Flächen (11, 21) jeweils eine Anzahl von identischen Rollenelementen (3) aufweisen, die stabil in entsprechenden Sitzen liegen und in der Lage sind, sich frei wenigstens um jeweilige radiale Achsen im Verhältnis zu den Naben (1, 2) zu drehen, sowie eine entsprechende Anzahl von Aussparungen (4), um die Rollenelemente (3) aufzunehmen, **dadurch gekennzeichnet**, dass jede der sich gegenüberliegenden querverlaufenden Flächen (11, 21) der beiden Naben (1, 2) einen jeweiligen hervorstehenden Ansatz (5, 6) aufweist, der von der querverlaufenden Fläche ausgeht und, gemessen parallel zu der gemeinsamen Achse der Naben, kürzer ist als die Menge, um welche die Rollenelemente (3) aus der entsprechenden Fläche herausragen, sowie wenigstens einen Sitz (7, 8), vorgesehen zur Aufnahme des Ansatzes (5, 6) der gegenüberliegenden Nabe in seiner Gesamtheit; **und dadurch**, dass die Ansätze (5, 6) und die Sitze (7, 8) jeweils in einem Abstand von der Mitte der entsprechenden Nabe (1, 2) angeordnet sind, anders als der Radius des Umfangs, um welchen die Rollenelemente (3) und die entsprechenden Aussparungen (4) verteilt sind, und zwar so, dass der Ansatz (5), der der von der Antriebswelle getragenen Nabe (2) zugeordnet ist, ausschliesslich mit dem Ansatz (6) der von der Antriebswelle getragenen Nabe (1) in Kontakt kommt, und zwar erst wenn diese im Verhältnis zu der angetriebenen Nabe eine fast komplette Umdrehung ausgeführt hat.

2. Antriebskupplung nach Patentanspruch 1, **dadurch gekennzeichnet**, dass die Rollenelemente (3) und die Aussparungen (4) umfangsmässig einen solchen Abstand voneinander haben, dass alle Rollenelemente sich nur dann in die entsprechenden Aussparungen einfügen, wenn sich die Naben (1, 2) in einer umfangsmässig passrechten Position befinden.

3. Antriebskupplung nach Patentanspruch 1, **dadurch gekennzeichnet**, dass der wenigstens einer Nabe (1, 2) zugeordnete Ansatz (5, 6) abnehmbar ist, und zwar auf solche Weise, dass er in einer von zwei verschiedenen Positionen befestigt werden kann, die sich auf jeder Seite des zur Aufnahme des verbleibenden Ansatzes (6 oder 5) bestimmten Sitzes (7 oder 8) befinden, und die gegenüberliegende Nabe (2 oder 1) zwei Sitze (8 oder 7) zur Aufnahme des abnehmbar befestigten Ansatzes (5 oder 6) aufweist.

## Revendications

1. Joint de transmission avec limitation du couple de transmission et conservation de la phase de rotation synchrone pouvant être associé en particulier aux arbres sur lesquels le rapport de transmission n'est pas unitaire et du type comprenant deux moyeux (1, 2) coaxiaux et pouvant être attachés de façon mécanique aux éléments, dont les faces transversales opposées (11, 21) présentent une pluralité d'éléments de roulement semblables (3), logés en permanence dans leurs emplacements correspondants avec la possibilité de tourner librement au moins autour des axes radiaux respectifs par rapport aux dits moyeux (1, 2), et respectivement autant de points (4) de réception des dits éléments de roulement (3),
caractérisé
- en ce que chacune des faces transversales (11, 21) des dits moyeux (1, 2) présente une saillie (5, 6) de profondeur correspondante à partir de ladite face transversale (11, 21), et mesurée parallèlement à l'axe commun des dits moyeux (1, 2), inférieure à la distance par laquelle lesdits éléments de roulements (3) dépassent' de la face correspondante, et présente également au moins un emplacement (7, 8) de réception complète de la saillie (5, 6) du moyeu opposé (1, 2); et
- en ce que lesdites saillies (5, 6) et les emplacements correspondants (7, 8) se trouvant à une distance du centre des moyeux respectifs (1, 2) d'une longueur différente du rayon de la circonférence autour duquel sont prévus lesdits éléments de roulement (3) et les emplacements respectifs (4) de façon à ce que la saillie (5) du moyeu (2) relié à l'arbre moteur ne rencontre que la saillie (6) de l'autre moyeu (1) et seulement après que ledit moyeu relié à l'arbre moteur ait accompli presque un tour par rapport à l'autre moyeu (1).

2. Joint de transmission avec limitation du couple de transmission selon la revendication 1, caractérisé en ce que les éléments de roulement (3) et les points (4) sont séparés de manière circonférentielle les uns par rapport aux autres à une distance telle que tous les corps de roulement ne peuvent loger dans les points respectifs que lorsque les moyeux (1, 2) coïncident de manière circonférentielle.

3. Joint de transmission selon la revendication 1, caractérisé en ce que la saillie (5, 6) d'au moins un des dits moyeux (1, 2) pouvant être enlevé de sorte qu'elle puisse être reliée à l'une des deux positions différentes se trouvant sur les côtés opposés de l'emplacement (7, 8) d'accueil de la saillie (6 ou 5) de l'autre moyeu (2 ou 1) lequel, de son côté, présente deux emplacements (8 ou 7) de réception de la saillie (5 ou 6) reliée de telle sorte qu'elle puisse être enlevée.
